(19) Europäisches Patentamt European Patent Office Office européen des brevets

(11) **EP 3 018 351 A2**

(12) **EUROPEAN PATENT APPLICATION**

(43) Date of publication:
**11.05.2016 Bulletin 2016/19**

(51) Int Cl.:
*F04C 23/00* *(2006.01)* *F04C 28/02* *(2006.01)*

(21) Application number: **15193090.6**

(22) Date of filing: **05.11.2015**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **05.11.2014 JP 2014225278**

(71) Applicant: **MITSUBISHI HEAVY INDUSTRIES, LTD.**
**Tokyo 108-8215 (JP)**

(72) Inventors:
• **TERAOKA, Masahiro**
**TOKYO, 108-8215 (JP)**
• **OKADA, Takuya**
**TOKYO, 108-8215 (JP)**

(74) Representative: **Intès, Didier Gérard André et al**
**Cabinet Beau de Loménie**
**158, rue de l'Université**
**75340 Paris Cedex 07 (FR)**

(54) **TWO-STAGE-COMPRESSION REFRIGERATING CYCLE APPARATUS, AND DEVICE AND METHOD FOR CONTROLLING THE APPARATUS**

(57) An objective of the present invention is to reduce the total power consumption of a compressor. In a control device (20) for an air conditioner having a two-stage-compression refrigerating cycle, first information in which a rotational speed, an intermediate pressure, and an efficiency are associated with each other for a lower-stage compressor (3a) is stored in a low-pressure-side storage section (31), and second information in which a rotational speed, an intermediate pressure, and an efficiency are associated with each other for a higher-stage compressor (3b) is stored in a high-pressure-side storage section (32). A target setting section (33) sets a target intermediate pressure in accordance with a predetermined algorithm. An intermediate-pressure determination section (34) determines, from the rotational speed of the lower-stage compressor (3a), the rotational speed of the higher-stage compressor (3b), the first information and the second information, an intermediate pressure at which the overall efficiency of the compressor becomes equal to or higher than the present overall efficiency. A target changing section (35) changes the target intermediate pressure set by the target setting section (33) to the intermediate pressure determined by the intermediate-pressure determination section (34).

FIG. 2

EP 3 018 351 A2

## Description

{Technical Field}

The present invention relates to a two-stage-compression refrigerating cycle apparatus, and a device and method for controlling the apparatus.

{Background Art}

A two-stage-compression refrigerating cycle apparatus formed by connecting two compressors in series with each other is known (see, for example, Patent Literature 1). In such a two-stage-compression refrigerating cycle apparatus, an intermediate pressure between a lower-stage compressor and a higher-stage compressor is controlled to be a pressure at which the total work done by the compressors is minimized, i.e., a pressure (theoretical intermediate pressure) at which the pressure ratio of the lower-stage compressor and the pressure ratio of the higher-stage compressor are equal to each other.

{Citation List}

{Patent Literature}

{PTL 1}

Japanese Unexamined Patent Application, Publication No. 2014-16079

{Summary of Invention}

{Technical Problem}

In a case where the capacity of the lower-stage compressor and the capacity of the higher-stage compressor are different from each other, or in a case where the lower-stage compressor and the higher-stage compressor are different models, however, there is a possibility of failure to minimize the power consumption even when the intermediate pressure is controlled at the above-mentioned theoretical intermediate pressure. Even if the capacity of the lower-stage compressor and the capacity of the higher-stage compressor are equal to each other or the lower-stage compressor and the higher-stage compressor are the same models, the above-mentioned theoretical intermediate pressure is not necessarily optimum when considered from the viewpoint of power consumption, because there is a machine-to-machine variation.

The present invention has been achieved in consideration of these circumstances, and an object of the present invention is to provide a two-stage-compression refrigerating cycle apparatus capable of reducing the total power consumption of compressors, and a device and method for controlling the apparatus.

{Solution to Problem}

According to a first aspect of the present invention, there is provided a control device for controlling a two-stage-compression refrigerating cycle apparatus having a compressor formed by connecting a lower-stage compressor and a higher-stage compressor in series with each other, the control device including a low-pressure-side storage means having first information stored therein, the first information including a rotational speed, an intermediate pressure, and an efficiency associated with each other for the lower-stage compressor, a high-pressure-side storage means having second information stored therein, the second information including a rotational speed, an intermediate pressure, and an efficiency associated with each other for the higher-stage compressor, a target setting means for setting a target intermediate pressure in accordance with a predetermined algorithm, an intermediate pressure determination means for determining, from the rotational speed of the lower-stage compressor, the rotational speed of the higher-stage compressor, the first information and the second information, an intermediate pressure at which the overall efficiency of the compressor becomes equal to or higher than the present overall efficiency, and a target changing means for changing the target intermediate pressure to the intermediate pressure determined by the intermediate pressure determination means.

In the arrangement according to the first aspect described above, an intermediate pressure obtained in accordance with a predetermined algorithm is set as a target intermediate pressure by the target setting means; an intermediate pressure at which an efficiency higher than the compressor efficiency at the present target intermediate pressure is obtained is thereafter determined by the intermediate pressure determination means; and the target intermediate pressure is changed by the target changing means to the intermediate pressure determined by the intermediate pressure determination means.

In this case, the intermediate pressure determination means determines, by using actual characteristics of the lower-stage compressor and the higher-stage compressor, an intermediate pressure at which the operation can be performed with high efficiency. High-efficiency (high-performance) operation can therefore be realized in comparison with the case of using a target intermediate pressure set by the target setting means. The higher-stage compressor is provided on the refrigerant flow downstream side of the lower-stage compressor.

In the control device according to the first aspect described above, the target setting means may set as the target intermediate pressure a theoretical intermediate pressure at which the compression ratio of the lower-stage compressor and the compression ratio of the higher-stage compressor are equal to each other.

In the arrangement according to the first aspect described above, an efficiency (performance) higher than that when an intermediate pressure is controlled at the theoretical intermediate pressure can be realized.

According to a second aspect of the present invention, there is provided a control device for controlling a two-stage-compression refrigerating cycle apparatus having a compressor formed by connecting a lower-stage compressor and a higher-stage compressor in series with each other, the control device including a storage means having intermediate pressure information stored therein, the intermediate pressure information including a parameter used in setting a target high-level pressure or a target low-level pressure and a target intermediate pressure at which an efficiency higher than an overall compressor efficiency at a theoretical intermediate pressure is obtained, the parameter and the target intermediate pressure being associated with each other, and a target setting means for obtaining and setting a target intermediate pressure corresponding to the present value of the parameter from the intermediate pressure information, wherein the theoretical intermediate pressure is an intermediate pressure at which a compression ratio of the lower-stage compressor and a compression ratio of the higher-stage compressor are equal to each other.

In this arrangement, a target intermediate pressure is set by using intermediate pressure information in which a parameter used in setting a target high-level pressure or a target low-level pressure and a target intermediate pressure at which an efficiency higher than an overall compressor efficiency at a theoretical intermediate pressure is obtained are associated with each other. The compressor is thereby enabled to operate with an efficiency (performance) higher than that when an intermediate pressure is controlled at the theoretical intermediate pressure. Further, use of the intermediate pressure information enables directly obtaining a target intermediate pressure from the present value of the parameter used in setting a target high-level pressure or a target low-level pressure. The process can be simplified in this way and the processing load can be reduced.

The above-described "parameter used in setting a target high-level pressure or a target low-level pressure" is, in other words, a parameter used for rotational speed control on the lower-stage compressor. Also, this parameter is changed depending on aspects of the two-stage-compression refrigerating cycle apparatus. Examples of such a parameter include a cooling water temperature and a set cold water temperature with respect to a turbo refrigerator arranged to supply cold water by releasing heat to cold water in a condenser and by absorbing heat from cold water in an evaporator. Other examples of such a parameter include an outside air temperature and a set temperature of supplied hot water with respect to a hot water supply system arranged to supply warm water (hot water) at a predetermined temperature by absorbing heat from outside air in an evaporator and by releasing heat to cold water in a condenser. Further examples of such a parameter include a set indoor temperature and an outside air temperature with respect to an air conditioner having a cooling function, a heating function or both these functions.

According to a third aspect of the present invention, there is provided a two-stage-compression refrigerating cycle apparatus including the above-described control device.

According to a fourth aspect of the present invention, there is provided a method of controlling a two-stage-compression refrigerating cycle apparatus having a compressor formed by connecting a lower-stage compressor and a higher-stage compressor in series with each other, the method including a target setting step of setting a target intermediate pressure in accordance with a predetermined algorithm, an intermediate pressure determination step of determining an intermediate pressure at which the overall efficiency of the compressor becomes equal to or higher than the present overall efficiency from first information including a rotational speed, an intermediate pressure, and an efficiency associated with each other for the lower-stage compressor, second information including a rotational speed, an intermediate pressure, and an efficiency associated with each other for the higher-stage compressor, the rotational speed of the lower-stage compressor and the rotational speed of the higher-stage compressor, and a target changing step of changing the target intermediate pressure to the intermediate pressure determined in the intermediate pressure determination step.

According to a fifth aspect of the present invention, there is provided a method of controlling a two-stage-compression refrigerating cycle apparatus having a compressor formed by connecting a lower-stage compressor and a higher-stage compressor in series with each other, the method including a target setting step of obtaining and setting, by using intermediate pressure information, a target intermediate pressure corresponding to the present value of a parameter used in setting a target high-level pressure or a target low-level pressure, the parameter and a target intermediate pressure at which an efficiency higher than an overall compressor efficiency at a theoretical intermediate pressure is obtained being associated with each other in the intermediate pressure information, wherein the theoretical intermediate pressure is an intermediate pressure at which a compression ratio of the lower-stage compressor and a compression ratio of the higher-stage compressor are equal to each other.

{Advantageous Effects of Invention}

According to the present invention, an effect of reducing the overall power consumption of the compressor is achieved.

{Brief Description of Drawings}

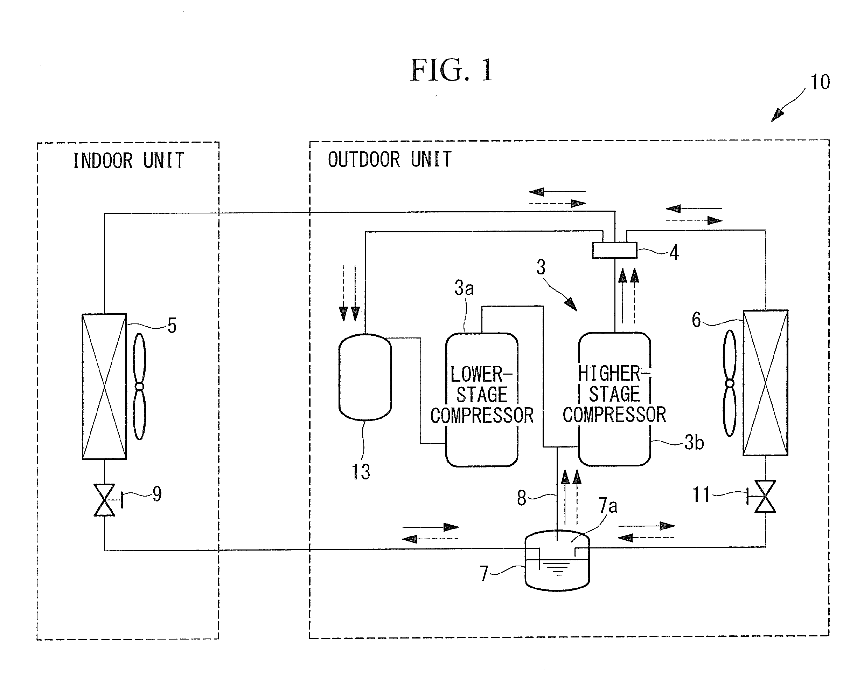

{Fig. 1}
Fig. 1 is a cooling system diagram of an air conditioner according to a first embodiment of the present invention.
{Fig. 2}
Fig. 2 is a diagram showing a configuration relating to rotational speed control on a compressor in various functions provided in a control device for the air conditioner according to the first embodiment of the present invention.
{Fig. 3}
Fig. 3 is a diagram showing an example of a lower-stage efficiency table.
{Fig. 4}
Fig. 4 is a diagram for explaining an efficiency computation equation for a two-stage compressor.
{Fig. 5}
Fig. 5 is a flowchart showing steps of a process executed by the control device for the air conditioner according to the first embodiment of the present invention.
{Fig. 6}
Fig. 6 is a diagram showing a configuration relating to rotational speed control on a compressor in various functions provided in a control device for an air conditioner according to a second embodiment of the present invention.
{Fig. 7}
Fig. 7 is a flowchart showing steps of a process executed by the control device for the air conditioner according to the second embodiment of the present invention.
{Fig. 8}
Fig. 8 is a flowchart showing steps of a process executed by a control device for an air conditioner according to a third embodiment of the present invention.

{Description of Embodiments}

An embodiment of a two-stage-compression refrigerating cycle apparatus, and a device and method for controlling the apparatus according to the present invention will be described with reference to the drawings. The two-stage-compression refrigerating cycle apparatus according to the present invention cools or heats a thermal medium and outputs the thermal medium cooled or heated. Examples of the two-stage-compression refrigerating cycle apparatus include an air conditioner and a turbo refrigerator. The thermal medium may be a gas or a liquid. The two-stage-compression refrigerating cycle apparatus may have only one of the function to cool the thermal medium and the function to heat the thermal medium or have both the two functions. In the following description, an air conditioner is described as an example of the two-stage-compression refrigerating cycle apparatus.

{First Embodiment}

Fig. 1 is a diagram of a refrigerant system for an air conditioner 10 according to a first embodiment of the present invention. The air conditioner 10 includes a compressor 3 which compresses a refrigerant, a four-way valve 4 for switching between cooling and heating, an indoor heat exchanger 5 in which indoor air and the refrigerant exchange heat, an outdoor heat exchanger 6 in which outdoor air and the refrigerant exchange heat, and an intercooler 7 which is provided between the indoor heat exchanger 5 and the outdoor heat exchanger 6, and which stores the liquid refrigerant. A first expansion valve 9 is provided in refrigerant piping between the intercooler 7 and the indoor heat exchanger 5, and a second expansion valve 11 is provided in refrigerant piping between the intercooler 7 and the outdoor heat exchanger 6. An accumulator 13 which stores a liquid part of the refrigerant is provided between the compressor 3 and the four-way valve 4 to prevent the refrigerant left ungasified from being drawn in the liquid state into the compressor 3. In the above-described arrangement, the compressor 3, the four-way valve 4, the outdoor heat exchanger 6, the intercooler 7, the second expansion valve 11 and the accumulator 13, for example, are provided in an outdoor unit, while the indoor heat exchanger 5 and the first expansion valve 9 are provided in an indoor unit.
The compressor 3 is a two-stage compressor including a lower-stage compressor 3a and a higher-stage compressor 3b. Each of the lower-stage compressor 3a and the higher-stage compressor 3b is a scroll compressor. The capacity of the higher-stage compressor 3b is lower than that of the lower-stage compressor 3a. For example, the capacity of the higher-stage compressor 3b is about 70 to 100% of the capacity of lower-stage compressor 3a. The refrigerant piping between the lower-stage compressor 3a and the higher-stage compressor 3b, in other words, the refrigerant drawing-in side of the higher-stage compressor 3b is connected to an air phase (upper space) 7a in the intercooler 7 by intermediate-pressure refrigerant piping 8.
The air conditioner 10 includes a pressure sensor (not shown) for measuring the pressure of the refrigerant ejected from the compressor 3 and flowing to the four-way valve 4 (high-level pressure: condensation pressure) and a pressure sensor (not shown) for measuring the pressure of the refrigerant returned from the four-way valve 4 to the compressor 3 (low-level pressure: evaporation pressure).
During cooling operation of the air conditioner 10 thus arranged, the high-temperature high-pressure refrigerant ejected from the higher-stage compressor 3b is delivered to the outdoor heat exchanger 6 via the four-way valve 4, as indicated by a broken line arrow, and is condensed and liquefied in the outdoor heat exchanger 6 by heat exchange with outside air to become the liquid refrigerant. The refrigerant having become the liquid refrigerant is adjusted to have an intermediate pressure with the second expansion valve 11, and the refrigerant is delivered to the intercooler 7. The intermediate-pressure refrigerant undergoes vapor-liquid separation in the intercooler 7. The gas refrigerant is led to the refrigerant drawing-in side of the higher-stage compressor 3b through the intermediate-pressure refrigerant piping 8, while the liquid refrigerant is stored in the intercooler 7. The liquid refrigerant at the intermediate pressure stored in the intercooler 7 expands adiabatically during passage through the first expansion valve 9, is thereafter delivered to the indoor heat exchanger 5 and evaporates in the indoor heat exchanger 5 by cooling indoor air. The refrigerant having gasified by absorbing heat in the indoor heat exchanger 5 is delivered to the lower-stage compressor 3a in the compressor 3 via the four-way valve 4 and the accumulator 13. The refrigerant compressed by the lower-stage compressor 3a becomes confluent with the gas refrigerant from the intermediate-pressure refrigerant piping 8 to be drawn into the higher-stage compressor 3b. The refrigerant further compressed by the higher-stage compressor 3b is delivered to the four-way valve 4.

Thus, during cooling operation of the air conditioner 10, the outdoor heat exchanger 6 functions as a condenser and the indoor heat exchanger 5 functions as an evaporator.

On the other hand, during heating operation of the air conditioner 10, the high-temperature high-pressure refrigerant ejected from the higher-stage compressor 3b is delivered to the indoor heat exchanger 5 via the four-way valve 4, as indicated by a solid line arrow, and is condensed and liquefied in the indoor heat exchanger 5 by releasing heat to indoor air to become the high-pressure low-temperature liquid refrigerant. This liquid refrigerant is adjusted to have an intermediate pressure with the first expansion valve 9, and the refrigerant is delivered to the intercooler 7. The intermediate-pressure refrigerant undergoes vapor-liquid separation in the intercooler 7. The gas refrigerant is led to the refrigerant drawing-in side of the higher-stage compressor 3b through the intermediate-pressure refrigerant piping 8, while the liquid refrigerant is stored in the intercooler 7. The liquid refrigerant at the intermediate pressure stored in the intercooler 7 expands adiabatically during passage through the second expansion valve 11, is thereafter delivered to the outdoor heat exchanger 6 and evaporates in the outdoor heat exchanger 6 by cooling outdoor air. The refrigerant having gasified by absorbing heat in the outdoor heat exchanger 6 is delivered to the lower-stage compressor 3a in the compressor 3 via the four-way valve 4 and the accumulator 13. The refrigerant compressed by the lower-stage compressor 3a becomes confluent with the gas refrigerant from the intermediate-pressure refrigerant piping 8 to be drawn into the higher-stage compressor 3b. The refrigerant further compressed by the higher-stage compressor 3b is delivered to the four-way valve 4.

Thus, during heating operation of the air conditioner 10, the indoor heat exchanger 5 functions as a condenser and the outdoor heat exchanger 6 functions as an evaporator.

In the present embodiment, heat exchange with gas is performed in each of the indoor heat exchanger 5 and the outdoor heat exchanger 6. However, the present invention is not limited to this. Heat exchange with a liquid (e.g., water) may alternatively be performed.

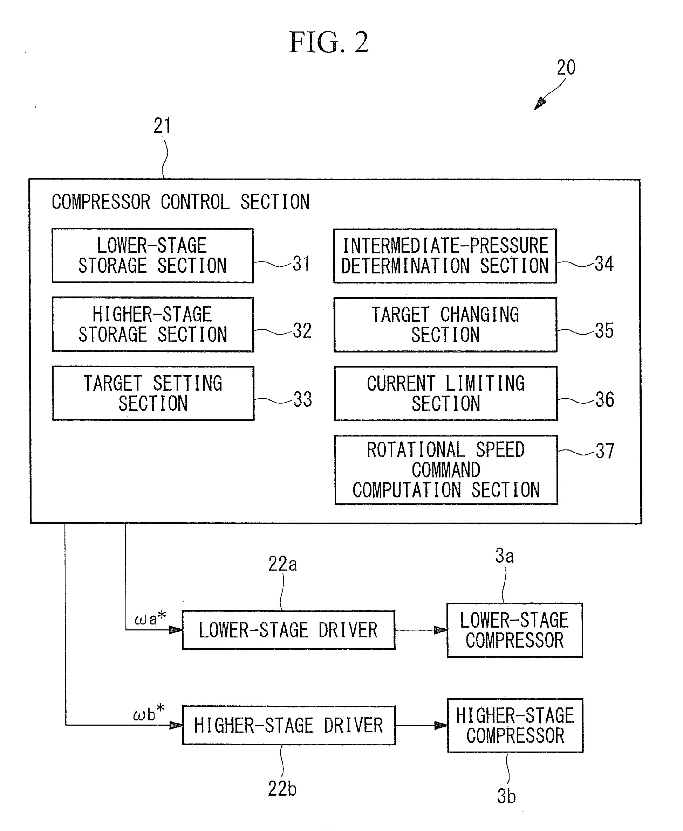

In this air conditioner 10, control of the compressor 3, switching of the four-way valve 4 and control of the openings of the first expansion valve 9 and the second expansion valve 11 are performed by a control device 20 (see Fig. 2). Fig. 2 is a diagram showing a configuration relating to rotational speed control on the compressor 3 in the various functions that the device for controlling the air conditioner 10 has. For example, the control device 20 includes, as its main components, a compressor control section 21, a lower-stage driver 22a for driving the lower-stage compressor 3a, and a higher-stage driver 22b for driving the higher-stage compressor 3b.

Each of the lower-stage driver 22a and the higher-stage driver 22b includes, for example, an inverter having six switching elements, a gate driver for driving the switching elements constituting the inverter, and a microprocessor which supplies a PWM signal to the gate driver based on the rotational speed command from the compressor control section 21.

The compressor control section 21 is, for example, a microprocessor. Various functions realized by sections in the compressor control section 21 described below are realized by a CPU reading out to a memory, such as a RAM, a program stored in a recording medium such as a ROM and executing the program.

The compressor control section 21 includes, for example, a lower-stage storage section (low-pressure-side storage means) 31, a higher-stage storage section (high-pressure-side storage means) 32, a target setting section (target setting means) 33, an intermediate-pressure determination section (intermediate pressure determination means) 34, a target changing section (target changing means) 35, a current limiting section 36 and a rotational speed command computation section 37.

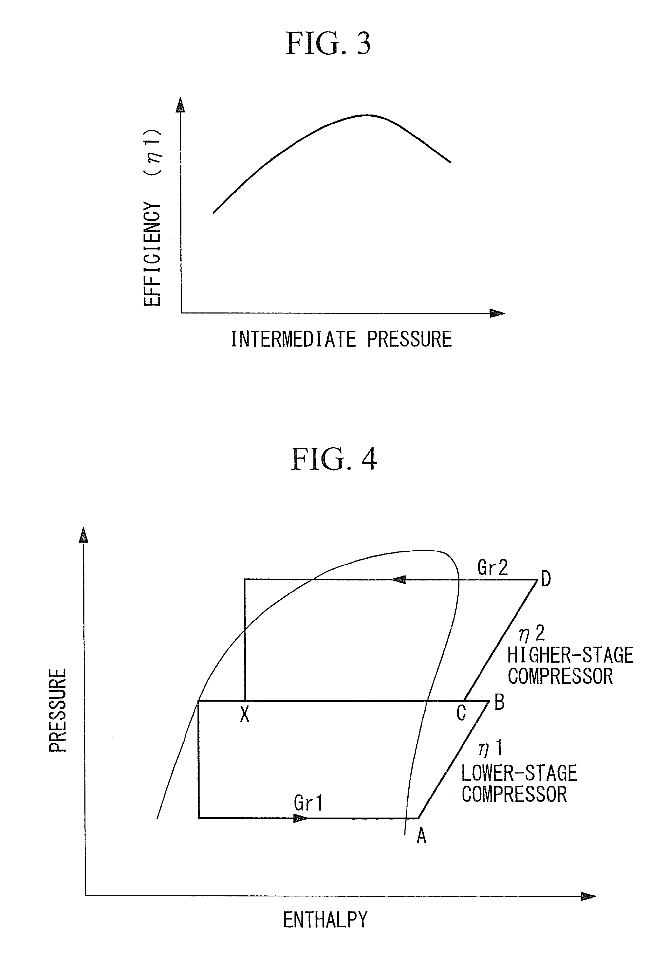

In the lower-stage storage section 31, first information in which a rotational speed, an intermediate pressure, and an efficiency are associated with each other for the lower-stage compressor 3a is stored. For example, a lower-stage efficiency table in which an intermediate pressure, and an efficiency are associated with each other as shown in Fig. 3 is stored on a rotational speed by rotational speed basis in the lower-stage storage section 31.

In the higher-stage storage section 32, second information in which a rotational speed, an intermediate pressure, and an efficiency are associated with each other for the higher-stage compressor 3b is stored. For example, a higher-stage efficiency table in which an intermediate pressure, and an efficiency are associated with each other is stored on a rotational speed by rotational speed basis in the higher-stage storage section 32, as is that in the lower-stage storage section 31.

The target setting section 33 sets a target intermediate pressure in accordance with a predetermined algorithm. For example, the target setting section 33 sets, from the evaporation pressure and the condensation pressure, a target intermediate pressure at an intermediate pressure at which the compression ratio of the lower-stage compressor 3a and the compression ratio of the higher-stage compressor 3b are equal to each other.

The intermediate-pressure determination section 34 determines, from the rotational speed of the lower-stage compressor 3a, the rotational speed of the higher-stage compressor 3b, the first information and the second information, an intermediate pressure at which the overall efficiency of the compressor becomes equal to or higher than the present overall efficiency. For example, the intermediate-pressure determination section 34 extracts efficiencies $\eta 1$ and $\eta 2$ at the same pressure Pm_i from the lower-stage efficiency table corresponding to the present rotational speed of the lower-stage compressor 3a and the higher-stage efficiency table corresponding to the present rotational speed of the higher-stage compressor 3b, and computes the overall efficiency of the compressor 3 at the intermediate pressure Pm_i by substituting the efficiencies $\eta 1$ and $\eta 2$ in the following expression (1).

{Expression 1}

$$\eta \_ all = \frac{2 - X}{\dfrac{1 - X}{\eta 1} + \dfrac{1}{\eta 2}} \qquad (1)$$

In expression (1), $\eta\_all$ is the overall efficiency of the compressor 3; X is the rate of injection of the gas refrigerant, which is computed from the intermediate pressure (Pm_i) and the degree of subcooling; $\eta 1$ is the efficiency of the lower-stage compressor 3a at the intermediate pressure Pm_i; and $\eta 2$ is the efficiency of the higher-stage compressor 3b at the intermediate pressure Pm_i.

The above expression (1) is an expression derived from a process described below.

For example, when a two-stage-compression refrigerating cycle Mollier chart such as shown in Fig. 4 is assumed, the total input W to the compressor 3 is expressed by the following expression (2).

{Expression 2}

$$W = \frac{Gr1 \times h_{AB}}{\eta 1} + \frac{Gr2 \times h_{CD}}{\eta 2} \qquad (2)$$

In the above expression (2), Gr1 is the rate of circulating refrigerant through the lower-stage compressor; Gr2 is the rate of circulating refrigerant through the higher-stage compressor; $h_{AB}$ is the difference in enthalpy between A and B in Fig. 4; $h_{CD}$ is the difference in enthalpy between C and D in Fig. 4; $\eta 1$ (= theoretical power/actual power) is the efficiency of the lower-stage compressor; $\eta 2$ (= theoretical power/actual power) is the efficiency of the higher-stage compressor; and X is the refrigerant dryness. If h = $h_{AB} \approx h_{CD}$, expression (2) is shown by the following expression (3).

{Expression 3}

$$W = \frac{(1 - X)Gr2 \times h}{\eta 1} + \frac{Gr2 \times h}{\eta 2}$$
$$= Gr2 \times h \times \left( \frac{1 - X}{\eta 1} + \frac{1}{\eta 2} \right) \qquad (3)$$

The total input W to the compressor 3 is shown by expression (4) below using the overall efficiency $\eta\_all$ of the compressor 3. Further, if h = $h_{AB} \approx h_{CD}$, expression (4) is shown by expression (5).

{Expression 4}

$$W = \frac{Gr1 \times h_{AB} + Gr2 \times h_{CD}}{\eta \_ all} \qquad (4)$$

$$W = Gr2 \times h \times \left( \frac{1 + (1 - X)}{\eta \_ all} \right) \qquad (5)$$

From the above expressions (3) and (5), an expression of the overall efficiency $\eta\_all$ of the compressor 3 shown in the above expression (1) is derived.

The intermediate-pressure determination section 34 computes the overall efficiency $\eta\_all$ of the compressor 3 when the value of the intermediate pressure Pm_i is changed in a predetermined range of intermediate pressure, and determines an intermediate pressure at which the value of the overall efficiency $\eta\_all$ is maximized.

The target changing section 35 changes the present target intermediate pressure to the intermediate pressure determined by the intermediate-pressure determination section 34.

The current limiting section 36 controls a current (e.g., a motor current) flowing through the higher-stage driver 22b so as to stop the current from exceeding a predetermined current limit value determined from the configuration of the higher-stage driver 22b. For example, when the motor current exceeds the current limit value, the present target intermediate pressure is increased until the motor current becomes equal to or lower than the current limit value. Also, when in this state the motor current becomes equal to or lower than a release current value set in advance, the target intermediate pressure is changed to the theoretical intermediate pressure.

The rotational speed command computation section 37 generates a lower-stage rotational speed command ωa* to be supplied to the lower-stage driver 22a and a higher-stage rotational speed command ωb* to be supplied to the higher-stage driver 22b.

More specifically, the rotational speed command computation section 37 generates, during cooling operation, a rotational speed command ωa* for the lower-stage compressor 3a such that the low-level pressure (lower-stage compressor 3a drawing pressure) becomes equal to a target low-level pressure determined from a set indoor temperature, and generates, during heating operation, a rotational speed command ωa* for the lower-stage compressor 3a such that, for example, the high-level pressure (higher-stage compressor 3b ejection pressure) becomes equal to a target high-level pressure determined from a set indoor temperature.

Also, the rotational speed command computation section 37 generates a rotational speed command ωb* for the higher-stage compressor 3b such that the intermediate pressure coincides with the target intermediate pressure presently set. For example, the rotational speed command computation section 37 may hold a rotational speed command ωb* computation equation including a target intermediate pressure as a parameter and obtain a rotational speed command ωb* by inputting the target intermediate pressure to the computation equation. The rotational speed command computation section 37 may alternatively hold a table in which a target intermediate pressure, and a rotational speed command ωb* are associated with each other and obtain the rotational speed command ωb* corresponding to the target intermediate pressure from this table. In such a case, when the target intermediate pressure is increased, the rotational speed of the higher-stage compressor 3b is controlled in the decreasing direction.

The lower-stage rotational speed command ωa* determined by the rotational speed command computation section 37 is supplied to the lower-stage driver 22a, and the higher-stage rotational speed command ωb* is supplied to the higher-stage driver 22b. Each of the lower-stage driver 22a and the higher-stage driver 22b drives the inverter so that the rotational speed of the compressor motor coincides with the supplied lower-stage rotational speed command ωa* or higher-stage rotational speed command ωb*.

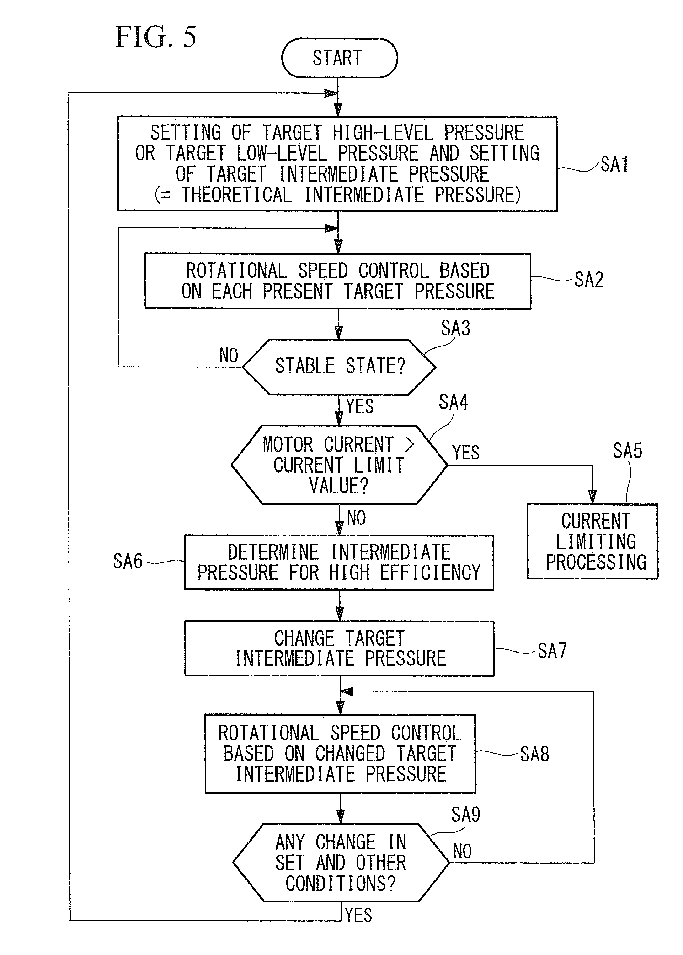

Control of the rotational speed of the compressor 3 executed by the control device 20 for the air conditioner according to the present embodiment will now be described with reference to Fig. 5.

Different kinds of target values are set on the basis of various sorts of input information, for example, information on cooling or heating, an outside air temperature and a set indoor temperature (step SA1). For example, when cooling is performed, a target low-level pressure is set from a set indoor temperature. When heating is performed, a target high-level pressure is set from a set indoor temperature. Also, the theoretical intermediate pressure is set as a target intermediate pressure. Subsequently, rotational speed control on the lower-stage compressor 3a is performed on the basis of the target low-level pressure (in the case of cooling) or the target high-level pressure (in the case of heating) set in step SA1, and rotational speed control on the higher-stage compressor 3b is performed on the basis of the target intermediate pressure (= theoretical intermediate pressure) (step SA2). Subsequently, determination is made as to whether or not the air conditioner is in a stable state (step SA3). For example, determination as to whether or not the air conditioner is in a stable state is made by determining, when cooling is performed, whether the difference between the low-level pressure and the target low-level pressure is within an allowable range and whether the difference between the intermediate pressure, and the target intermediate pressure is within an allowable range, or by determining, when heating is performed, whether the difference between the high-level pressure and the target high-level pressure is within an allowable range and whether the difference between the intermediate pressure, and the target intermediate pressure is within an allowable range. Determination as to whether the air conditioner is in a stable state is not limited to the above-described example. For example, determination as to whether the air conditioner is in a stable state may be made by determining whether the difference between the indoor temperature and the set indoor temperature is within an allowable range.

If the result is that the air conditioner is not in a stable state ("NO" in step SA3), the process returns to step SA2 and rotational speed control is performed on the basis of each target pressure. If the air conditioner is in a stable state ("YES" in step SA3), determination is made as to whether or not the motor current has exceeded the predetermined current limit value (step SA4). If the motor current has exceeded the predetermined current limit value ("YES" in step SA4), current limiting processing is performed (step SA5). The target intermediate pressure set in step SA1 is thereby increased until the motor current becomes equal to or lower than the current limit value, and the rotational speed of the higher-stage compressor 3b is controlled on the basis of the target intermediate pressure at which the motor current becomes equal to or lower than the current limit value.

On the other hand, if it is determined in step SA4 that the motor current has not exceeded the predetermined current limit value ("NO" in step SA4), an intermediate pressure at which the overall efficiency η_all of the compressor 3 is maximized is determined by using the lower-stage efficiency table corresponding to the present rotational speed of the lower-stage compressor 3a, the higher-stage efficiency table corresponding to the present rotational speed of the higher-stage compressor 3b and expression (1) shown above (step SA6). In the case where a selection is made from efficiency tables, the lower-stage rotational speed command ωa* determined from the target high-level pressure or the target low-level pressure and the higher-stage rotational speed command ωb* determined from the present intermediate pressure may be used in place of the actual rotational speed of the lower-stage compressor 3a and the actual rotational speed of the higher-stage compressor 3b. Use of the lower-stage rotational speed command ωa* and the higher-stage rotational speed command ωb* in this way enables removal of noise components and selection of a suitable one of the efficiency tables.

Subsequently, the present target intermediate pressure is changed to the intermediate pressure determined in step SA6 (step SA7) and rotational speed control on the higher-stage compressor 3b is performed on the basis of the changed target intermediate pressure (step SA8), thereby enabling the compressor 3 to be operated with improved efficiency in comparison with the case where the intermediate pressure is controlled at the theoretical intermediate pressure.

Subsequently, determination is made as to whether or not any one of the set and other conditions including the outside air temperature and the set indoor temperature has been changed (step SA9). If none of the conditions has been changed, the process returns to step SA8 and rotational speed control is performed on the basis of the changed target intermediate pressure, i.e., the target intermediate pressure at which the overall efficiency of the compressor 3 is maximized. On the other hand, if one of the set and other conditions has been changed, the process returns to step SA1, a target high-level pressure or a target low-level pressure is newly set on the basis of the conditions after the change, and the target intermediate pressure is set to the theoretical intermediate pressure.

In the air conditioner 10, and the device 20 and method for controlling the air conditioner 10 according to the present embodiment, as described above, a lower-stage efficiency table indicating an efficiency characteristic of the lower-stage compressor 3a and a higher-stage efficiency table indicating an efficiency characteristic of the higher-stage compressor 3b are respectively prepared; an intermediate pressure at which the efficiency of the compressor 3 as a whole is improved is determined by using information in the tables; and the rotational speed of the higher-stage compressor 3b is controlled on the basis of the determined intermediate pressure. Since an intermediate pressure at which the efficiency is maximized is determined by using the actual efficiency characteristics of the lower-stage compressor 3a and the higher-stage compressor 3b as described above, the efficiency (performance) can be improved in comparison with the case where rotational speed control is performed on the basis of the theoretical intermediate pressure.

It is not necessarily required that the intermediate-pressure determination section 34 determine an intermediate pressure at which the overall efficiency η_all of the compressor 3 is maximized. For example, if an intermediate pressure at which an overall efficiency higher than the overall efficiency η_all exhibited when control based on the theoretical intermediate pressure is performed is taken, the objective to improve the performance can be accomplished.

{Second Embodiment}

An air conditioner, and a device and method for controlling the air conditioner according to a second embodiment of the present invention will now be described.

In the above-described first embodiment, the overall efficiency η_all when an intermediate pressure is changed is computed by using the lower-stage efficiency table and the higher-stage efficiency table, and the intermediate pressure at which the overall efficiency η_all is highest in the computation results is set as a target intermediate pressure. However, the intermediate pressure at which the efficiency is maximized can be determined from the outside air temperature, the set indoor temperature and the rotational speed of the low-pressure-side compressor without performing computation such as described above, for a reason described below.

That is, in the compressor 3, the higher-stage rotational speed command ωb* is constantly maintained as long as the intermediate pressure is not changed, since the rotation speed of the higher-stage compressor 3b is controlled on the basis of the intermediate pressure. In contrast, the rotational speed of the lower-stage compressor 3a is changed with a change in the set conditions. More specifically, the target high-level pressure or the target low-level pressure is changed in response to a change in outside air temperature or set indoor temperature. With this change in target high-level pressure or target low-level pressure, the rotational speed of the lower-stage compressor 3a is changed. In response to the change in rotational speed of the lower-stage compressor 3a, the lower-stage efficiency table to be referred to at the time of computation of the intermediate pressure at which the overall efficiency of the compressor 3 is maximized is changed. Accordingly, a time when the intermediate pressure for improved efficiency is changed is said to be a time when the outside air temperature or the set indoor temperature is changed.

Further, as long as the outside air temperature, the set indoor temperature and the rotational speed of the lower-stage compressor 3a are not changed, the intermediate pressure at which the overall efficiency η_all is maximized is fixed at all times. Therefore, intermediate pressure information in which the outside air temperature, the set indoor temperature, the rotational speed of the lower-stage compressor 3a and the intermediate pressure at which the overall efficiency of the compressor 3 is maximized are associated with each other may be prepared in advance to enable obtaining the intermediate pressure at which the overall efficiency η_all of the compressor 3 is maximized directly from the outside air temperature, the set indoor temperature and the rotational speed of the lower-stage compressor 3a.

A control device 20' according to the present embodiment sets a target intermediate pressure by using the above-described intermediate pressure information. The air conditioner, and the device and method for controlling the air conditioner according to the present embodiment will be described mainly with respect to points of difference from the above-described first embodiment while omitting description of commonalities with the first embodiment.

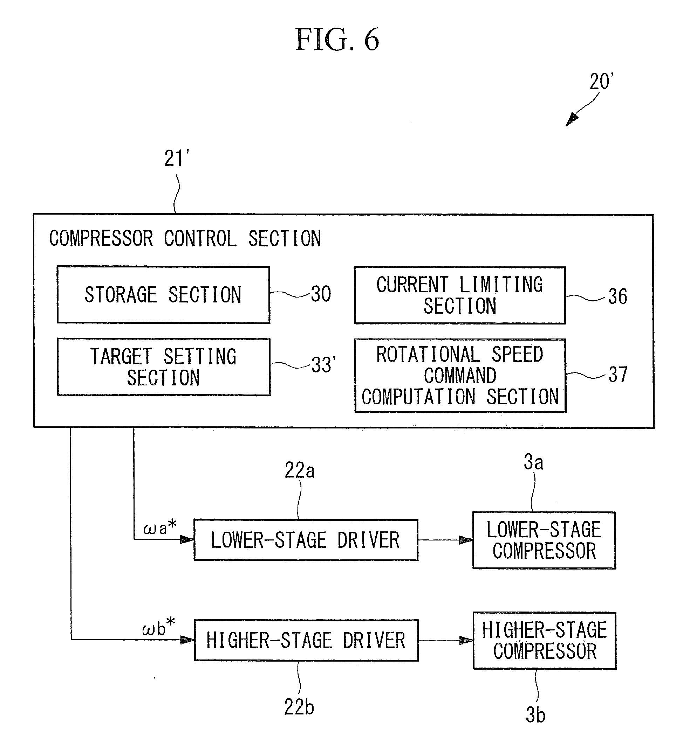

Fig. 6 is a diagram showing the configuration of the control device 20' according to the present embodiment. As shown in Fig. 6, a compressor control section 21' includes a storage section 30 provided in place of the lower-stage storage section 31 and the higher-stage storage section 32 according to the first embodiment shown in Fig. 2, the storage section (storage means) 30 storing intermediate pressure information in which an outside air temperature, a set indoor temperature, the rotational speed of the lower-stage compressor 3a and an intermediate pressure at which the overall efficiency of the compressor 3 is maximized are associated with each other. Also, the intermediate-pressure determination section 34 and the target changing section 35 are removed, and a target setting section (target setting means) 33' sets as a target intermediate pressure an intermediate pressure obtained from the intermediate pressure information stored in the storage section 30.

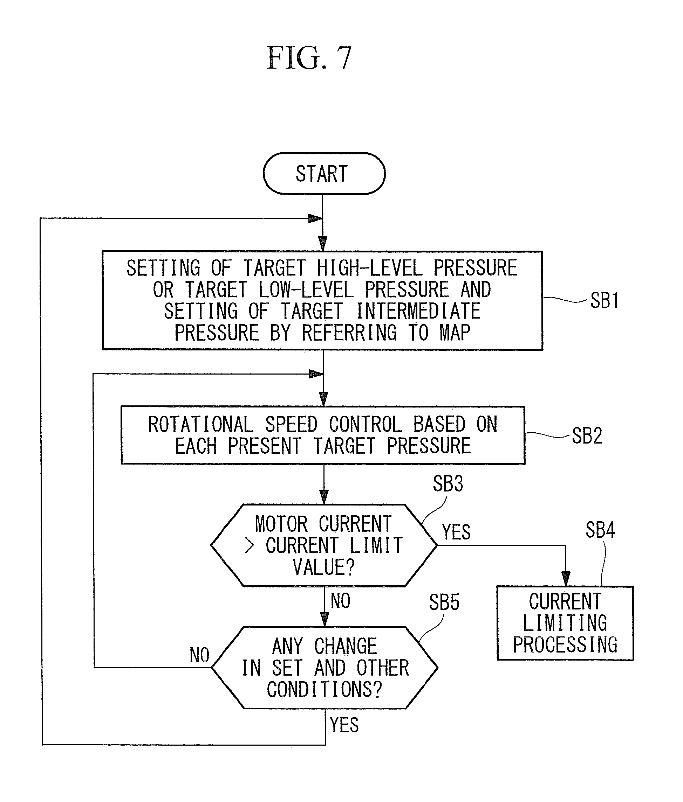

In the control device 20' thus arranged, different kinds of target values are set on the basis of various sorts of input information, for example, information on cooling or heating, an outside air temperature and a set indoor temperature (step SB1), as shown in Fig. 7. For example, when cooling is performed, a target low-level pressure is set from a set indoor temperature. When heating is performed, a target high-level pressure is set from a set indoor temperature. Also, an intermediate pressure corresponding to the present outside air temperature and set indoor temperature is obtained from the intermediate pressure information stored in the storage section 30 and is set as a target intermediate pressure. Subsequently, rotational speed control on the lower-stage compressor 3a is performed on the basis of the target low-level pressure (in the case of cooling) or the target high-level pressure (in the case of heating) set in step SB1, and rotational speed control on the higher-stage compressor 3b is performed on the basis of the target intermediate pressure (step SB2). Subsequently, determination is made as to whether or not the motor current has exceeded the predetermined current limit value (step SB3). If the motor current has exceeded the predetermined current limit value ("YES" in step SB3), current limiting processing is performed (step SB4). The target intermediate pressure set in step SB1 is thereby increased until the motor current becomes equal to or lower than the current limit value, and the rotational speed of the higher-stage compressor 3b is controlled on the basis of the target intermediate pressure at which the motor current becomes equal to or lower than the current limit value.

On the other hand, if it is determined in step SB3 that the motor current has not exceeded the predetermined current limit value ("NO" in step SB3), determination is made as to whether or not any one of the set and other conditions including the outside air temperature and the set indoor temperature has been changed (step SB5). If none of the conditions has been changed, the process returns to step SB2 and rotational speed control is performed on the basis of the present target intermediate pressure. On the other hand, if one of the set and other conditions has been changed, the process returns to step SB1, a target high-level pressure or a target low-level pressure is newly set on the basis of the conditions after the change, and the target intermediate pressure is set by using the intermediate pressure information in the storage section 30.

In the air conditioner 10 and the device 20' and method for controlling the air conditioner 10 according to the present embodiment, as described above, the computation process can be simplified in comparison with the first embodiment and the computation processing load can be reduced.

{Third Embodiment}

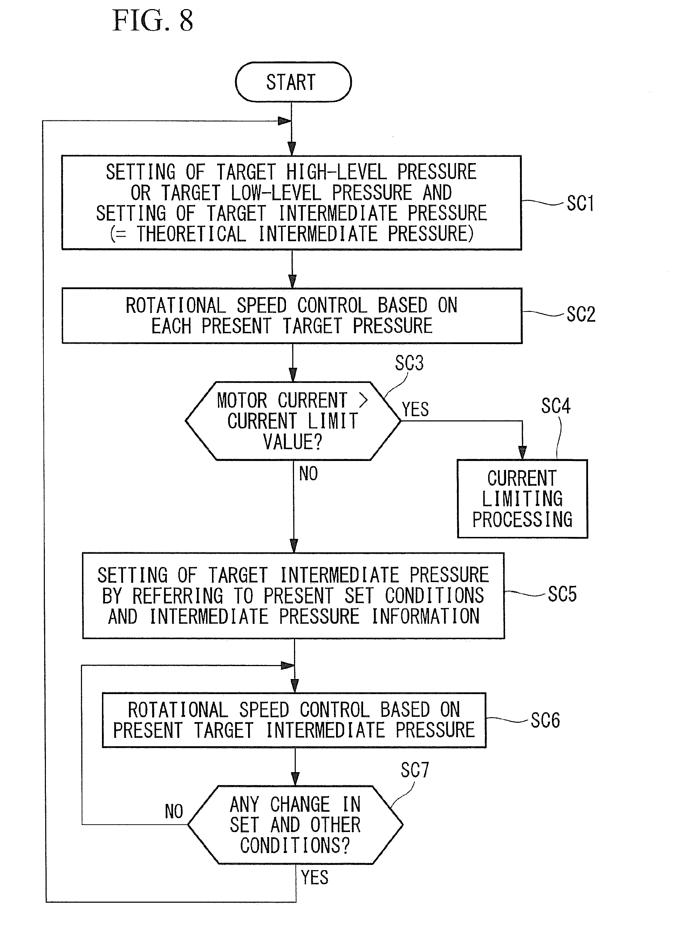

An air conditioner, and a device and method for controlling the air conditioner according to a third embodiment of the present invention will now be described. In the above-described second embodiment, the target setting section 33' sets as a target intermediate pressure an intermediate pressure obtained by referring to the intermediate pressure information in step SB1 in Fig. 7. In the present embodiment, the theoretical intermediate pressure is set as an initial value of a target intermediate pressure, and a target intermediate pressure setting using the intermediate pressure information is thereafter made as in the above-described second embodiment. A process executed by the control device 20' according to the present embodiment will be described below with reference to Fig. 8. The configuration of the control device is generally the same as that of the control device 20' according to the second embodiment, and the description of the configuration of the control device is therefore omitted.

First, different kinds of target values are set by the target setting section 33' on the basis of various sorts of input information, for example, information on cooling or heating, an outside air temperature and a set indoor temperature as in the above-described first embodiment (step SC1). For example, when cooling is performed, a target low-level pressure is set from a set indoor temperature. When heating is performed, a target high-level pressure is set from a set indoor temperature. Also, the theoretical intermediate pressure is set as a target intermediate pressure. Subsequently, rotational speed control on the lower-stage compressor 3a is performed on the basis of the target low-level pressure (in the case of cooling) or the target high-level pressure (in the case of heating) set in step SC1, and rotational speed control on the higher-stage compressor 3b is performed on the basis of the target intermediate pressure (= theoretical intermediate pressure) (step SC2). Subsequently, determination is made as to whether or not the motor current has exceeded the predetermined current limit value (step SC3). If the motor current has exceeded the predetermined current limit value ("YES" in step SC3), current limiting processing is performed (step SC4). The target intermediate pressure set in step SC1 is thereby increased until the motor current becomes equal to or lower than the current limit value, and the rotational speed of the higher-stage compressor 3b is controlled on the basis of the target intermediate pressure at which the motor current becomes equal to or lower than the current limit value.

On the other hand, if it is determined in step SC3 that the motor current has not exceeded the predetermined current limit value ("NO" in step SC3), the intermediate pressure corresponding to the present outside air temperature, the set indoor temperature and the rotational speed of the lower-stage compressor 3a is obtained by the target setting section 33' from the intermediate pressure information stored in the storage section 30 and is set as the target intermediate pressure (step SC5). Rotational speed control on the higher-stage compressor 3b is then performed on the basis of the changed target intermediate pressure (step SC6). As a result, the compressor 3 can be operated with improved efficiency in comparison with the case where the intermediate pressure is controlled at the theoretical intermediate pressure.

Subsequently, determination is made as to whether or not any one of the set and other conditions including the outside air temperature and the set indoor temperature has been changed (step SC7). If none of the conditions has been changed, the process returns to step SC6 and rotational speed control is performed on the basis of the present target intermediate pressure, i.e., the target intermediate pressure at which the overall efficiency of the compressor 3 is maximized. On the other hand, if one of the set and other conditions has been changed, the process returns to step SC1 and the above-described processing is repeated.

The air conditioners and the devices and methods for controlling the air conditioner according to the embodiments of the present invention have been described above. The present invention, however, is not limited to the above-described embodiments. Various modifications of the embodiments can be made within the scope of the present invention.

{Reference Signs List}

| 3 | Compressor |
| 3a | Lower-stage compressor |
| 3b | Higher-stage compressor |
| 4 | Four-way valve |
| 5 | Indoor heat exchanger |
| 6 | Outdoor heat exchanger |
| 7 | Intercooler |
| 8 | Intermediate-pressure refrigerant piping |
| 9 | First expansion valve |
| 10 | Air conditioner |
| 11 | Second expansion valve |
| 13 | Accumulator |
| 20, 20' | Control device |
| 21, 21' | Compressor control section |
| 22a | Lower-stage driver |
| 22b | Higher-stage driver |
| 30 | Storage section |
| 31 | Lower-stage storage section |
| 32 | Higher-stage storage section |
| 33, 33' | Target setting section |
| 34 | Intermediate-pressure determination section |
| 35 | Target changing section |
| 36 | Current limiting section |
| 37 | Rotational speed command computation section |

**Claims**

1. A control device (20) for controlling a two-stage-compression refrigerating cycle apparatus having a compressor formed by connecting a lower-stage compressor (3a) and a higher-stage compressor (3b) in series with each other, the control device comprising:

a low-pressure-side storage means (31) having first information stored therein, the first information including a rotational speed, an intermediate pressure, and an efficiency associated with each other for the lower-stage compressor (3a);
a high-pressure-side storage means (32) having second information stored therein, the second information including a rotational speed, an intermediate pressure, and an efficiency associated with each other for the higher-stage compressor (3b);
a target setting means (33) for setting a target intermediate pressure in accordance with a predetermined algorithm;
an intermediate pressure determination means (34) for determining, from a rotational speed of the lower-stage compressor (3a), a rotational speed of the higher-stage compressor (3b), and the first information and the second information, an intermediate pressure at which an overall efficiency of the compressor becomes equal to or higher than a present overall efficiency; and
a target changing means (35) for changing the target intermediate pressure to the intermediate pressure determined by the intermediate pressure determination means (34).

**2.** The control device (20) according to Claim 1, wherein the target setting means (33) sets as the target intermediate pressure a theoretical intermediate pressure at which a compression ratio of the lower-stage compressor (3a) and a compression ratio of the higher-stage compressor (3b) are equal to each other.

**3.** A control device (20') for controlling a two-stage-compression refrigerating cycle apparatus having a compressor formed by connecting a lower-stage compressor (3a) and a higher-stage compressor (3b) in series with each other, the control device comprising:

a storage means (30) having intermediate pressure information stored therein, the intermediate pressure information including a parameter used in setting a target high-level pressure or a target low-level pressure, and a target intermediate pressure at which an efficiency higher than an overall compressor efficiency at a theoretical intermediate pressure is obtained, the parameter and the target intermediate pressure being associated with each other; and
a target setting means (33') for obtaining and setting a target intermediate pressure corresponding to a present value of the parameter from the intermediate pressure information, wherein the theoretical intermediate pressure is an intermediate pressure at which a compression ratio of the lower-stage compressor (3a) and a compression ratio of the higher-stage compressor (3b) are equal to each other.

**4.** A two-stage-compression refrigerating cycle apparatus comprising the control device (20, 20') according to any one of Claims 1 to 3.

**5.** A method of controlling a two-stage-compression refrigerating cycle apparatus having a compressor (3) formed by connecting a lower-stage compressor (3a) and a higher-stage compressor (3b) in series with each other, the method comprising:

a target setting step of setting a target intermediate pressure in accordance with a predetermined algorithm;
an intermediate pressure determination step of determining an intermediate pressure at which an overall efficiency of the compressor (3) becomes equal to or higher than a present overall efficiency from first information including a rotational speed, an intermediate pressure, and an efficiency associated with each other for the lower-stage compressor (3a), second information including a rotational speed, an intermediate pressure, and an efficiency associated with each other for the higher-stage compressor (3b), the rotational speed of the lower-stage compressor (3a) and the rotational speed of the higher-stage compressor (3b); and
a target changing step of changing the target intermediate pressure to the intermediate pressure determined in the intermediate pressure determination step.

**6.** A method of controlling a two-stage-compression refrigerating cycle apparatus having a compressor (3) formed by connecting a lower-stage compressor (3a) and a higher-stage compressor (3b) in series with each other, the method comprising:

a target setting step of obtaining and setting, by using intermediate pressure information, a target intermediate pressure corresponding to a present value of a parameter used in setting a target high-level pressure or a target low-level pressure, the parameter and a target intermediate pressure at which an efficiency higher than an overall compressor efficiency at a theoretical intermediate pressure is obtained being associated with each other in the intermediate pressure information,
wherein the theoretical intermediate pressure is an intermediate pressure at which a compression ratio of the lower-stage compressor (3a) and a compression ratio of the higher-stage compressor (3b) are equal to each other.

FIG. 1

EP 3 018 351 A2

# FIG. 2

20

21

COMPRESSOR CONTROL SECTION

| LOWER-STAGE STORAGE SECTION | ~31 |

| INTERMEDIATE-PRESSURE DETERMINATION SECTION | ~34 |

| HIGHER-STAGE STORAGE SECTION | ~32 |

| TARGET CHANGING SECTION | ~35 |

| TARGET SETTING SECTION | ~33 |

| CURRENT LIMITING SECTION | ~36 |

| ROTATIONAL SPEED COMMAND COMPUTATION SECTION | ~37 |

22a

3a

$\omega a^*$ → LOWER-STAGE DRIVER → LOWER-STAGE COMPRESSOR

$\omega b^*$ → HIGHER-STAGE DRIVER → HIGHER-STAGE COMPRESSOR

22b

3b

# FIG. 3

# FIG. 4

## FIG. 5

```
                    ┌─────────────┐
                    │    START    │
                    └─────────────┘
                           │
                           ▼
    ┌──────────────────────────────────────────────┐
    │      SETTING OF TARGET HIGH-LEVEL PRESSURE    │
    │  OR TARGET LOW-LEVEL PRESSURE AND SETTING     │──SA1
    │       OF TARGET INTERMEDIATE PRESSURE         │
    │     (= THEORETICAL INTERMEDIATE PRESSURE)     │
    └──────────────────────────────────────────────┘
                           │
                           ▼
    ┌──────────────────────────────────────────────┐
    │      ROTATIONAL SPEED CONTROL BASED           │──SA2
    │      ON EACH PRESENT TARGET PRESSURE          │
    └──────────────────────────────────────────────┘
                           │
                           ▼              SA3
          NO    ◇─────────────────────◇
    ◄───────────│    STABLE STATE?     │
                ◇─────────────────────◇
                           │ YES
                           ▼           SA4
                ◇─────────────────────◇        YES
                │   MOTOR CURRENT >    │──────────────┐
                │    CURRENT LIMIT     │              │
                │       VALUE?         │              ▼       SA5
                ◇─────────────────────◇        ┌──────────────┐
                           │ NO                 │   CURRENT    │
                           ▼                    │   LIMITING   │
    ┌──────────────────────────────────────┐   │  PROCESSING  │
SA6─│      DETERMINE INTERMEDIATE          │   └──────────────┘
    │    PRESSURE FOR HIGH EFFICIENCY      │
    └──────────────────────────────────────┘
                           │
                           ▼
    ┌──────────────────────────────────────┐
    │         CHANGE TARGET                 │──SA7
    │     INTERMEDIATE PRESSURE             │
    └──────────────────────────────────────┘
                           │
                           ▼
    ┌──────────────────────────────────────┐
    │      ROTATIONAL SPEED CONTROL         │
    │    BASED ON CHANGED TARGET            │──SA8
    │      INTERMEDIATE PRESSURE            │
    └──────────────────────────────────────┘
                           │
                           ▼           SA9
                ◇─────────────────────◇
                │   ANY CHANGE IN      │   NO
                │   SET AND OTHER      │────────►
                │   CONDITIONS?        │
                ◇─────────────────────◇
                           │ YES
```

# FIG. 6

20'

21'

| COMPRESSOR CONTROL SECTION | |
|---|---|
| STORAGE SECTION —30 | CURRENT LIMITING SECTION —36 |
| TARGET SETTING SECTION —33' | ROTATIONAL SPEED COMMAND COMPUTATION SECTION —37 |

22a

3a

$\omega a^*$ → LOWER-STAGE DRIVER → LOWER-STAGE COMPRESSOR

$\omega b^*$ → HIGHER-STAGE DRIVER → HIGHER-STAGE COMPRESSOR

22b

3b

# FIG. 7

```
                        START

              SETTING OF TARGET HIGH-LEVEL PRESSURE
              OR TARGET LOW-LEVEL PRESSURE AND
              SETTING OF TARGET INTERMEDIATE          SB1
              PRESSURE BY REFERRING TO MAP

              ROTATIONAL SPEED CONTROL BASED ON
              EACH PRESENT TARGET PRESSURE            SB2

                         SB3
                  MOTOR CURRENT        YES         SB4
                > CURRENT LIMIT                  CURRENT
                     VALUE?                      LIMITING
                                               PROCESSING
                         NO        SB5
                   ANY CHANGE
            NO   IN SET AND OTHER
                  CONDITIONS?

                        YES
```

# FIG. 8

```
                    ┌──────────────┐
                    │    START     │
                    └──────┬───────┘
                           │
    ┌──────────────────────▼────────────────────────┐
    │  SETTING OF TARGET HIGH-LEVEL PRESSURE         │
    │     OR TARGET LOW-LEVEL PRESSURE AND           │── SC1
    │  SETTING OF TARGET INTERMEDIATE PRESSURE       │
    │  (= THEORETICAL INTERMEDIATE PRESSURE)         │
    └──────────────────────┬────────────────────────┘
                           │
    ┌──────────────────────▼────────────────────────┐
    │     ROTATIONAL SPEED CONTROL BASED ON          │── SC2
    │        EACH PRESENT TARGET PRESSURE            │
    └──────────────────────┬────────────────────────┘
                           │
                          SC3
                     ╱           ╲              SC4
                    ╱ MOTOR CURRENT >╲  YES        │
                   ⟨  CURRENT LIMIT   ⟩──────►┌──────────────┐
                    ╲   VALUE?       ╱        │   CURRENT    │
                     ╲             ╱          │   LIMITING   │
                       │ NO                   │  PROCESSING  │
                       │                      └──────────────┘
    ┌──────────────────▼─────────────────────────────┐
    │  SETTING OF TARGET INTERMEDIATE PRESSURE        │
    │  BY REFERRING TO PRESENT SET CONDITIONS         │── SC5
    │  AND INTERMEDIATE PRESSURE INFORMATION          │
    └──────────────────────┬─────────────────────────┘
                           │
    ┌──────────────────────▼─────────────────────────┐
    │     ROTATIONAL SPEED CONTROL BASED ON           │── SC6
    │   PRESENT TARGET INTERMEDIATE PRESSURE          │
    └──────────────────────┬─────────────────────────┘
                           │
                          SC7
              NO        ╱        ╲
         ◄────────────⟨ ANY CHANGE IN ⟩
                       ╲ SET AND OTHER ╱
                        ╲ CONDITIONS? ╱
                           │ YES
```

**EP 3 018 351 A2**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2014016079 A